(19) Europäisches Patentamt

European Patent Office

Office européen des brevets

(11) **EP 4 624 433 A1**

(12) **DEMANDE DE BREVET EUROPEEN**

(43) Date de publication:
**01.10.2025 Bulletin 2025/40**

(21) Numéro de dépôt: **25166582.4**

(22) Date de dépôt: **27.03.2025**

(51) Classification Internationale des Brevets (IPC):
**C03C 1/00** (2006.01)   **C03C 3/089** (2006.01)
**C03C 3/091** (2006.01)   **C03C 13/00** (2006.01)

(52) Classification Coopérative des Brevets (CPC):
**C03C 1/002; C03C 3/089; C03C 3/091; C03C 13/00**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **29.03.2024 FR 2403310**

(71) Demandeurs:
• **Saint-Gobain Isover**
  **92400 Courbevoie (FR)**
• **Saint-Gobain Adfors**
  **92400 Courbevoie (FR)**

(72) Inventeurs:
• **CINTORA GONZALEZ, Octavio**
  **93300 AUBERVILLIERS (FR)**
• **KHIARA, Nargisse**
  **93300 AUBERVILLIERS (FR)**
• **N'GUESSAN, Essey Noël**
  **93300 AUBERVILLIERS (FR)**
• **COCHARD, Jean-Patrick**
  **93300 AUBERVILLIERS (FR)**

(74) Mandataire: **Saint-Gobain Recherche**
  **41 Quai Lucien Lefranc**
  **93300 Aubervilliers (FR)**

(54) **PROCEDE DE FABRICATION DE FIBRES DE VERRE A PARTIR DE MATIERES MINERALES INCLUANT DE L'HYDROXYDE DE SODIUM ANHYDRE**

(57) L'invention concerne un mélange de matières premières pour la préparation de verre fondu pour la fabrication de fibres de verre présentant une composition cible, comprenant la fusion d'un mélange de matières premières, dans lequel on utilise comme source de sodium de l'hydroxyde de sodium sous forme anhydre et de préférence sous forme d'un ensemble de particules présentant une densité apparente inférieure à 1,2 g/cm$^3$, de préférence encore une densité apparente inférieure à 1 g/cm$^3$.

Processed by Luminess, 75001 PARIS (FR)

**Description**

L'invention concerne le domaine de la fusion d'un mélange de matières premières, en particulier pour la fabrication d'une laine de verre tel qu'utilisée notamment dans le domaine de l'isolation thermique et/ou acoustique des bâtiments ou autres. Selon un autre aspect, l'invention concerne également la fabrication de verre C utilisé notamment dans le domaine des fibres textiles et des matériaux composites.

La fabrication, notamment par la société déposante de laine de verre par fusion et fibrage de matières premières naturelles et abondantes (sable ou roche volcanique) est un procédé connu et maîtrisé depuis longtemps. Les produits isolants ainsi obtenus se présentent sous la forme d'un «matelas» de laine de verre composé d'une structure variant de souple à rigide et emprisonnant de l'air de façon stable et immobile dans l'enchevêtrement des fibres.

La laine de verre possède d'excellentes propriétés thermiques et acoustiques qui lui confèrent une place de choix dans l'isolation des bâtiments d'habitation et des bâtiments non résidentiels (tertiaires, commerciaux, industriels) depuis plus de 80 ans. Les formes sous lesquelles la laine de verre est commercialisée sont variées : rouleaux, panneaux souples ou semi-rigides à dérouler, panneaux rigides, coquilles, nappes ou flocons.

Grâce à sa structure enchevêtrée générant une multitude de petites cavités, la laine de verre est un matériau poreux emprisonnant de l'air. L'air immobile emprisonné dans ces pores donne à la laine de verre un fort pouvoir isolant avec un minimum de matière.

La base de fabrication de la laine de verre ou du verre C est un sable de carrière (naturellement abondant) auquel on ajoute des fondants comme le carbonate de sodium, et au moins un alcalino-terreux (pour donner au verre de la résistance à l'hydrolyse) comme le calcaire (carbonate de calcium) et la dolomie ($CaMg(CO_3)_2$). Selon certaines réalisations, du bore peut également être introduit pour lui conférer une meilleure résistance chimique et hydrolytique (notamment pour le verre C) ou encore pour en améliorer les propriétés thermiques, notamment pour la lame de verre. Le fibrage est réalisé dans des conditions telles qu'il est intégral (pas de résidus comme des infondus). Le fibrage se fait par centrifugation au travers d'assiettes percées. La matière en fusion passe dans une filière puis dans des assiettes de fibrage en continu d'où elle ressort sous forme de fils de verre qui sont pulvérisés de polymère (le liant) pour former un matelas. Après ajout des liants et autres des éléments spécifiques à chaque usage, le matelas de laine est polymérisé et calandré.

Aux critères de qualité et de faisabilité industrielle et économique, s'étant ajouté depuis quelques années celui d'un caractère biodégradable de la laine de verre, à savoir la capacité de celle-ci à se dissoudre rapidement en milieu physiologique, en vue de prévenir tout risque pathogène potentiel lié à l'accumulation éventuelle des fibres les plus fines dans l'organisme par inhalation, une composition de laine de verre adaptée en conséquence a été proposée dans la demande EP 399320, à laquelle on se réfèrera pour plus de précision sur cette technique.

Parallèlement on connait également un procédé pour la fabrication de fibres de verre, en particulier de fibres de verre C.

Le verre C est un verre spécialement conçu pour sa meilleure résistance chimique aux solvants et à l'eau. Les matières premières sont fondues et le verre obtenu passe par des orifices appelés bushings. Les bushings sont généralement en Pt. Les fils de verre, après sortie du bushing, sont refroidis à l'air ou à la vapeur pour former un matelas.

Il peut être utilisé sous la forme d'une fibre d'environ 5 microns d'épaisseur et de 10 à 4000 microns de longueur, voire jusqu'à quelques centimètres de longueur.

La bonne résistance chimique du verre borosilicate C le rend idéal pour une utilisation pour diverses applications comme dans les peintures vinylester, époxy acryliques et les revêtements acryliques comme barrière contre les attaques corrosives des produits chimiques et de l'humidité.

Habituellement, le verre C est également obtenu par fusion d'un bain de matière première comprenant de la silice, du calcaire, du feldspath, du borax, du carbonate de sodium et éventuellement de la dolomie, les composants de base étant judicieusement choisis pour fournir une composition de verre produisant des fibres alliant souplesse et robustesse à la traction mécanique ainsi qu'aux agents chimiques acides ou basiques.

Le mélange fondu (fibre de verre pour l'isolation ou le verre C) est ainsi habituellement préparé par la fusion dans un four de matières premières comprenant de la silice, une source de sodium, le plus souvent du carbonate de sodium $Na_2CO_3$, au moins une source d'alcalino-terreux (magnésium et/ou calcium) sous la forme de calcaire (carbonate de calcium) et/ou de dolomie ($CaMg(CO_3)_2$).

Au cours de la fusion du mélange initial pour la fabrication de la laine de verre ou du verre C, les carbonates dégagent du gaz carbonique dont les bulles contribuent au brassage de la masse en cours de fusion. Par ailleurs, certains carbonates comme la dolomie, avant même de libérer leur $CO_2$, se divisent en particules plus fines selon le phénomène dit de décrépitation, lequel peut être assez violent et générer des poussières venant encrasser et même corroder les divers conduits équipant les fours (cheminées, régénérateurs, etc). Dans un procédé classique de fabrication de laine de verre ou de verre C, l'émission de $CO_2$ due à la fusion des matières premières est généralement de l'ordre de 10 à 25% de la masse totale des matières premières utilisées.

Par ailleurs, le gaz carbonique est un gaz à effet de serre et il est souhaitable de mettre au point des procédés de fabrication de laine minérale générant le moins de $CO_2$ possible pour des raisons environnementales, tout en menant à un produit de bonne qualité et pour un coût acceptable.

En plus du dégagement de $CO_2$ directement lors du procédé de fusion du bain de matières premières, il est donc important de considérer le procédé de fabrication du verre dans sa globalité, en tenant compte d'autres facteurs comme le coût des matières premières, leur transport, le coût énergétique de la mise à disposition desdites matières premières ou encore la dépense énergétique globale permettant la fusion du mélange.

Comme indiqué précédemment, le verre est habituellement préparé par la fusion dans un four de matières premières comprenant une portion importante de carbonates.

Au cours de la fusion, les carbonates dégagent du gaz carbonique dont les bulles contribuent au brassage de la masse en cours de fusion. Il est souhaitable de mettre au point des procédés de fabrication du verre générant le moins de CO2 possible pour des raisons environnementales, tout en menant à un verre de bonne qualité et pour un coût acceptable, notamment du point de vue de la dépense énergétique nécessaire pour la fabrication du verre.

L'hydroxyde de sodium a été proposé comme alternative au carbonate de sodium et a pour effet de réduire le $CO_2$ généré pendant la fabrication du verre comme par exemple dans les publications US3753743A ou BE761040A. L'hydroxyde de sodium y est utilisé sous forme de lessive de soude, avec une concentration de soude comprise entre 30 et 75 % poids.

Néanmoins, comme décrit dans la suite de la présente description, il est apparu qu'utiliser une solution d'hydroxyde de sodium à une telle concentration a pour conséquence de grandement détériorer l'écoulement du mélange vitrifiable car celui-ci devient fortement pâteux à cause de la grande quantité d'eau ajoutée et d'augmenter fortement la dépense énergétique nécessaire pour la fabrication du verre. Également, l'homogénéité chimique du verre est apparue insuffisante avec une telle solution.

La demande de brevet WO2022/229571 décrit également l'utilisation d'hydroxyde de sodium pour la formation d'un verre.

L'objet de la présente invention est de proposer un mélange destiné à la production de verre comprenant du bore, notamment pour la fabrication de fibres de verre, permettant de résoudre les problèmes précédents et en particulier d'obtenir une répartition homogène de l'oxyde de sodium et de l'oxyde de silicium dans le verre final, tout en gardant un bon écoulement du mélange vitrifiable et en réduisant la consommation d'énergie nécessaire à ladite fabrication.

A cette fin, les expérimentations menées par la société déposante ont montré les avantages d'utiliser comme source de sodium dans le mélange de matière premières initial de l'hydroxyde de sodium sous forme anhydre, en particulier si sa densité et de préférence sa morphologie sont spécifiquement adaptées à un tel usage. Par forme anhydre, on entend toute source d'hydroxyde de sodium présentant une perte de masse inférieure à 5% après un traitement thermique à 150°C pendant 1h.

Plus précisément, l'invention concerne en particulier un mélange de matières premières pour la préparation d'un verre fondu adapté pour la formation de fibres, dont la composition cible répond à la formulation ci-dessous, en pourcentage poids :

- $SiO_2$ : entre 50 et 75%, de préférence entre 60 et 70%
- $Na_2O$: entre 10 et 25%, de préférence entre 10 et 20%
- CaO: entre 5 et 15%, de préférence entre 5 et 10%
- MgO : entre 1 à 10%, de préférence entre 2 et 5%
- CaO et MgO représentant ensemble de préférence entre 5 et 20%
- $B_2O_3$ : entre 1 et 10%, de préférence entre 2 et 8%
- $Al_2O_3$ : entre 0 et 8%, de préférence entre 1 et 6%
- $K_2O$ : entre 0 et 5%, de préférence entre 0,5 et 2%
- $Na_2O$ et $K_2O$ représentant ensemble de préférence entre 12 et 20%
- Oxyde de fer : entre 0 et 3%, de préférence moins de 2%, de préférence encore moins de 1%,
- autre (s) oxyde (s) : entre 0 et 5 % poids en cumulé, de préférence moins de 3% en cumulé,

le reste étant constitué d'impuretés inévitables.

Ledit mélange comprend:

- au moins une source de silicium notamment choisie parmi la silice, un calcin de verre, des fibres minérales recyclées, en particulier de laine de verre recyclée, en particulier un mélange de silice et de calcin de verre ou un mélange de silice et de fibres minérales recyclées, ou encore un mélange de silice, de calcin de verre et de fibres minérales recyclées,
- au moins une source de sodium sous forme d'hydroxyde de sodium,
- au moins une source de calcium, de préférence choisie parmi le calcaire, la chaux vive ou éteinte ou un oxyde mixte de calcium avec au moins un élément choisi dans le groupe constitué par Si, Mg, en particulier un silicate de calcium, ladite source de calcium pouvant être au moins en partie du calcin,

- au moins un porteur de bore, de préférence choisie parmi un oxyde de bore tel que le pentaborax ou un oxyde mixte de bore avec au moins un élément choisi dans le groupe constitué par Si, Mg, Ca, en particulier un oxyde choisi dans le groupe constitué par la colémanite, l'ulexite, la tincalconite ou la kernite,
- optionnellement au moins une source de magnésium de préférence choisie parmi la dolomie éventuellement calcinée, la magnésite ($MgCO_3$), la brucite ($Mg(OH)_2$) ou un oxyde mixte de magnésium avec au moins un élément choisi dans le groupe constitué par Si, Ca, en particulier un silicate de magnésium,
- optionnellement au moins un composé choisi dans le groupe constitué par du feldspath, notamment de formule $(K,Na)AlSi_3O_8$, de la néphéline ou de la phonolite,
- optionnellement du calcin de verre recyclé,
- optionnellement un laitier

dans lequel hydroxyde de sodium est sous forme anhydre, en particulier sous forme de particules anhydres.

De préférence le mélange est constitué, pour plus de 90% poids ou même plus de 95% poids, de préférence encore pour plus de 99% poids, des constituants précédemment cités.

De préférence, le mélange selon l'invention est exempte d'eau. On entend par là qu'il n'est pas ajouté d'eau dans le mélange et que l'humidité éventuellement présente provient des matières premières. De préférence, le mélange contient moins de 1% en poids d'eau, de préférence moins de 0,5% en poids d'eau, plus préférentiellement moins de 0,2% en poids d'eau, par rapport au poids total du mélange.

Dans ledit mélange selon l'invention, l'hydroxyde de sodium se présente de préférence sous la forme d'un ensemble de particules de densité apparente inférieure à 1,2 g/cm$^3$, de préférence encore une densité apparente inférieure à 1,0 g/cm$^3$, ou même inférieure à 0,8 g/cm$^3$.

Dans la présente description, on décrit par le terme « particule » une entité individualisée de l'hydroxyde de sodium anhydre.

La densité apparente, ou masse volumique apparente, est une grandeur habituellement utilisée essentiellement avec les substances se présentant sous forme de particules (ou grains), afin de rendre compte de la masse de matériau contenue dans un volume donné, comprenant le volume d'air interstitiel.

La densité apparente (aussi appelée masse volumique apparente) est mesurée de la manière suivante :

Selon un protocole opératoire aisément reproductible de mesure de la masse volumique apparente du mélange granulaire, ce dernier est d'abord versé dans un récipient, par exemple un seau, de masse et de volume connu. Le récipient doit faire au moins 1 litres pour avoir une précision suffisante et respecter un rapport d'aspect permettant de limiter le tassement du mélange, en vérifiant la formule :

$$L_{max} \leq 2\sqrt[3]{V}$$

,

dans laquelle $L_{max}$ est l'étendue maximale du récipient dans une direction donnée, par analogie avec le diamètre de Féret d'une particule, et V est le volume dudit récipient.

Il importe de plus de veiller à verser le mélange doucement, sans aucun mouvement du seau ni compression mécanique du mélange, afin de limiter au maximum le tassement du mélange. Le seau rempli est ensuite pesé afin de déterminer la masse du mélange versé. La masse volumique apparente est le rapport entre la masse de mélange mesurée et le volume du seau.

Dans la présente description on décrit par le terme « particule » une entité individualisée de l'hydroxyde anhydre.

Par l'expression « pour la préparation d'un verre fondu de composition cible », on entend que les différentes matières premières précédemment cités sont présentes dans ledit mélange dans des proportions adaptées pour l'obtention finale, après fusion selon les techniques de l'art, du verre de la composition cible décrite ci-dessus.

Ce mélange de matières premières est donc destiné à être chauffé à une température et dans des conditions permettant sa fusion pour l'obtention d'un verre répondant à ladite composition cible et son étirage sous forme des fibres précédemment décrites.

Selon des modes particuliers et avantageux de la présente invention qui peuvent bien entendu le cas échéant être combinés entre eux :

- Ledit hydroxyde de sodium anhydre est sous forme d'un ensemble de particules présentant une circularité moyenne inférieure à 0,85, de préférence inférieure à 0,80 ou même supérieure à 0,75.
- Ledit hydroxyde de sodium anhydre est sous forme d'un ensemble de particules présentant un rapport de forme moyen supérieur à 1,15, de préférence supérieur à 1,20.
- Ledit hydroxyde de sodium anhydre est sous forme d'un ensemble de particules dont le diamètre de Féret moyen est supérieur à 5 millimètres, de supérieur à 10 millimètres.

- L'hydroxyde de sodium anhydre comprend une proportion d'eau totale inférieure à 30% poids, de préférence inférieure à 25% poids.
- L'hydroxyde de sodium est la seule source de sodium (hormis les éventuels ajouts de calcin ou de feldspath, de la néphéline ou de la phonolite).
- Alternativement, le sodium est apporté sous forme d'un mélange de d'hydroxyde de sodium et de carbonate de sodium $Na_2CO_3$, l'hydroxyde de sodium anhydre selon l'invention représentant de préférence plus de 20% poids dudit mélange, ou même plus de 50% poids dudit mélange.
- Une source de calcium est un silicate de calcium minéral, de préférence naturel.
- Une source de calcium est un oxyde de calcium.
- Une source de calcium est un hydroxyde de calcium.
- Une source de magnésium est un silicate de magnésium minéral, de préférence naturel.
- Une source de calcium est un silicate de calcium minéral, de préférence naturel, comprenant, en pourcentage poids, plus de 30% de $SiO_2$ et plus de 10% de CaO, de préférence plus de 15% de CaO, CaO et $SiO_2$ représentant ensemble plus de 60%, voire plus de 70% ou même plus de 80% du poids total de ladite source.
- Une source de magnésium est un silicate de magnésium minéral, de préférence naturel, comprenant, en pourcentage poids, plus de 30% de $SiO_2$ et plus de 10% de MgO, de préférence plus de 15% de MgO, MgO et $SiO_2$ représentant ensemble plus de 60%, voire plus de 70% ou même plus de 75% du poids total de ladite source.
- Une source de magnésium est la brucite $Mg(OH)_2$.
- Les matières premières dudit bain de fusion comprennent une source de calcium telle que précédemment décrite et une source de magnésium telle que précédemment décrite.
- Une source de potassium est un hydroxyde de potassium.

Selon l'invention lesdites matières premières, en particulier les oxydes minéraux comme les silicates précédemment cités, sont naturels. En particulier on peut utiliser selon l'invention des silicates naturels, c'est dire sous leur composition initiale géologique après leur extraction de leur gisement, en particulier sans altération chimique visant à en modifier la composition initiale, c'est-à-dire des matières minérales non transformées chimiquement. En particulier, selon le procédé de la présente invention, on se base initialement sur la composition exacte de ces matières minérales géologiques non transformées, telle que déterminée précisément par toute technique adéquate (par exemple analyse chimique, diffraction des rayons X, etc.) pour déterminer la composition du bain initial. Ils peuvent cependant bien entendu subir des étapes préalables à leur utilisation comme matière première de la fusion mais sans transformation chimique des grains cristallins les constituant. De telles étapes peuvent être un concassage, un criblage, un lavage ou encore une flottation, une séparation magnétique ou toute autre séparation physique des impuretés présentes entre lesdits grains de la matière minérale naturelle.

La silice est généralement introduite dans le mélange de matières premières sous forme de sable.

Si nécessaire, comme indiqué précédemment, le mélange de matières premières peut également comprendre avantageusement un porteur d'Al, précurseur d'alumine dans le verre, comme un feldspath ou alternativement un laitier de haut fourneau par exemple.

Le mélange de matières premières peut également comprendre en faibles proportions un colorant comme un oxyde de fer, un oxyde de cobalt, un oxyde de chrome.

Selon l'invention, on introduit le moins possible de carbonate, voire aucun carbonate dans le mélange de matières premières. De préférence, la somme du poids de carbonate d'alcalin et de carbonate d'alcalino-terreux est inférieure à 30%, et de préférence inférieure à 10%, et de préférence inférieure à 5%, et de préférence inférieure à 1% en poids, voire est nulle dans le mélange de matières premières. Selon un mode possible avantageux, le mélange de matières premières peut être sensiblement exempt de tout carbonate. Il est avantageusement apte à ne dégager qu'une portion minime d'oxyde de carbone lors de son chauffage et sa fusion en verre due par exemple à l'ajout de coke dans le mélange initial.

Pour réaliser le verre, le porteur de Si est introduit dans le mélange de matières premières sous forme de sable, les porteurs d'alcalin sont avantageusement introduits dans le mélange de matières premières sous forme d'hydroxydes, en particulier sous forme de NaOH anhydre et préférentiellement de densité et morphologie adaptée selon l'invention. L'éventuel porteur d'aluminium peut être introduit dans le mélange de matières premières sous forme de poudre de feldspath.

Chaque matière première est introduite dans le mélange de matières premières en quantité telle que le pourcentage molaire de son cation (comme Si, Na, Mg, Ca, B, K Al, etc.) par rapport à la somme des moles de tous les cations soit le même que dans le verre final. Comme indiqué précédemment, les matières premières du mélange sont choisies pour mener à un verre dont la composition cible entre dans le cadre (les gammes de pourcentage pour les différents oxydes) décrit(es) précédemment.

Le mélange de matières premières est chauffé jusqu'à l'obtention d'un verre fondu, généralement dans un four.

On chauffe plus ou moins haut en température et plus ou moins longtemps selon la qualité du verre que l'on cherche, notamment selon le degré de tolérance en particules non fondues (appelées « infondus ») et en bulles. Généralement, la température maximale de chauffage du verre fondu est comprise entre 1200 et 1700°C. Pour la transformation du mélange de matières premières en verre, on peut faire appel aux techniques de fusion du verre bien connues de l'homme du métier. Cette transformation peut être réalisée dans tout type de four comme un four électrique à électrodes, un four à brûleurs aérien comme un four à brûleurs transversaux ou un four à boucle, un four à brûleurs immergés.

Pour le chauffage et la fusion en verre, le mélange de matières premières peut être introduit dans un four à l'état pulvérulent, ce qui implique que chaque matière première qu'il contient est à l'état de poudre. Pour le chauffage et la fusion en verre, le mélange de matières premières peut être introduit dans un four à l'état de composition comprenant du calcin et ledit mélange de matières premières, ce dernier étant le cas échéant pulvérulent.

L'invention concerne également un procédé de fabrication d'un verre présentant cette même composition cible, comprenant la fusion d'un mélange de matières premières tel que décrit précédemment, ledit mélange constituant un bain de fusion, ledit procédé comprenant les étapes suivantes :

a) on sélectionne les quantités nécessaires en lesdites matières premières pour obtenir après fusion un verre de ladite composition cible, lesdites matières premières étant choisies parmi, au moins:

- au moins une source de silicium notamment choisie parmi la silice, un calcin de verre, des fibres minérales recyclées, en particulier de laine de verre recyclée, en particulier un mélange de silice et de calcin de verre ou un mélange de silice et de fibres minérales recyclées, ou encore un mélange de silice, de calcin de verre et de fibres minérales recyclées,
- au moins une source de sodium sous forme d'hydroxyde de sodium,
- au moins une source de calcium, de préférence choisie parmi le calcaire, la chaux vive ou éteinte ou un oxyde mixte de calcium avec au moins un élément choisi dans le groupe constitué par Si, Mg, en particulier un silicate de calcium, ladite source de calcium pouvant être au moins en partie du calcin,
- au moins un porteur de bore, de préférence choisie parmi un oxyde de bore tel que le pentaborax ou un oxyde mixte de bore avec au moins un élément choisi dans le groupe constitué par Si, Mg, Ca, en particulier un oxyde choisi dans le groupe constitué par la colémanite, l'ulexite, la tincalconite ou la kernite,
- optionnellement au moins une source de magnésium de préférence choisie parmi la dolomie éventuellement calcinée, la magnésite ($MgCO_3$), la brucite ($Mg(OH)_2$) ou un oxyde mixte de magnésium avec au moins un élément choisi dans le groupe constitué par Si, Ca, en particulier un silicate de magnésium,
- optionnellement au moins un composé choisi dans le groupe constitué par du feldspath, notamment de formule $(K,Na)AlSi_3O_8$, de la néphéline ou de la phonolite,
- optionnellement du calcin de verre recyclé,
- optionnellement un laitier,

b) on effectue ledit mélange desdites matières premières selon lesdites quantités,
c) on effectue la fusion dudit mélange et son refroidissement dans les conditions permettant l'obtention dudit verre,

dans lequel ledit hydroxyde de sodium dudit mélange est sous forme anhydre, en particulier sous de particules anhydres.

De préférence, l'hydroxyde de sodium est sous forme d'un ensemble de particules présentant une densité apparente inférieure à 1,2 g/cm$^3$, de préférence encore une densité apparente inférieure à 1,0 g/cm$^3$.

## Exemples

Dans les exemples qui suivent on a préparé différents mélanges de matières premières afin de comparer un mélange tel qu'actuellement utilisé pour la fabrication de verre pour une composition de verre final identique, lequel a sensiblement la composition suivante :

[Tableau 1]

| Eléments | Pourcentage poids% |
|---|---|
| $SiO_2$ | 65,0 |
| CaO | 6,7 |
| $B_2O_3$ | 5,6 |
| $Na_2O$ | 15,7 |

(suite)

| Eléments | Pourcentage poids% |
|---|---|
| MgO | 2,8 |
| $Al_2O_3$ | 2,5 |
| $Fe_2O_3$ | <1 |
| $K_2O$ | 0,7 |
| Autres oxydes | Impuretés |

Le tableau 2 ci-dessous donne les proportions des différentes matières premières pour les 5 mélanges préparés :

[Tableau 2]

| | Mélange A | Mélange B | Mélange D | Mélange C |
|---|---|---|---|---|
| | kg/tonne verre | kg/tonne verre | kg/tonne verre | kg/tonne verre |
| Sable | 543 | 543 | 543 | 543 |
| Feldspath | 151 | 151 | 151 | 151 |
| Carbonate de sodium | 208 | | | |
| Hydroxyde de Sodium 1 | | 314 | | |
| Hydroxyde de Sodium 2 | | | | 157 |
| Hydroxyde de Sodium 3 | | | 157 | |
| Dolomie calcinée | 74 | 74 | 74 | 74 |
| Calcaire | 41 | 41 | 41 | 41 |
| Borax pentahydrate | 127 | 127 | 127 | 127 |

Les mélanges se différentient par la granulométrie et la taille de la source d'hydroxyde de sodium utilisée.

La granulométrie et les différentes caractéristiques géométriques des différentes formes d'hydroxydes de sodium utilisées ont été déterminées par analyses d'image en utilisant le logiciel ImageJ®. Le diamètre médian, le diamètre de Féret, la circularité et le rapport de forme sont ainsi déterminés pour chacun des hydroxydes de sodium et leurs valeurs sont données dans le tableau 3 qui suit.

Plus précisément :

La circularité d'une particule est donnée par la formule $S = 4\pi (A/P^2)$, avec A aire et P le périmètre de ladite particule.

Le diamètre de Feret est classiquement défini comme la distance entre deux tangentes parallèles à la périphérie de la surface projetée de la particule selon une direction.

Le diamètre médian $d_{50}$ de chaque échantillon d'hydroxyde de sodium est mesuré également par analyses d'image en utilisant le logiciel ImageJ®.

Le diamètre équivalent d'une particule est défini comme le diamètre d'un cercle dont le périmètre est équivalent au périmètre de ladite particule, tel que mesuré sur lesdites images.

Le rapport de forme d'une particule est le ratio entre sa plus grande longueur et sa plus petite longueur, de sorte que l'ensemble de la projection de la particule est comprise entre ces deux parallèles.

On définit ensuite une circularité, un diamètre de Féret, un diamètre équivalent et un rapport de forme moyens pour l'ensemble des particules de chaque échantillon d'hydroxyde de sodium, tel que reportés dans le tableau 3 qui suit.

Les proportions d'eau libre et d'eau liée de ces différentes qualités d'hydroxyde de sodium y sont également reportée.

De façon classique le diamètre médian diamètre pour lequel 50 % des particules en nombre ont un diamètre inférieur à ce diamètre et 50% un diamètre supérieur.

[Tableau 3]

| | Mélange B | Mélange D | Mélange C |
| --- | --- | --- | --- |
| | Hydroxyde de Sodium 1 | Hydroxyde de Sodium 3 | Hydroxyde de Sodium 2 |
| Diamètre médian $d_{50}$ | - | 5325$\mu$m | 9484$\mu$m |
| Diamètre de Féret | - | 5775$\mu$m | 12311$\mu$m |
| Diamètre équivalent | - | 6210$\mu$m | 12368$\mu$m |
| Circularité | - | 0,75 | 0,59 |
| Rapport de forme | - | 1,11 | 1,35 |
| Densité apparente (g/cm$^3$) | - | 1,08 | 0,74 |
| Eau totale | 61,5% | 23% | 23% |
| Eau libre | 50% | Moins de 2% | Moins de 2% |
| Eau liée | 11,5% | reste | reste |

L'eau totale correspond à l'ensemble eau libre plus eau liée.

Le pourcentage d'eau liée est donc obtenu en retranchant le pourcentage d'eau libre au pourcentage d'eau totale (« reste » dans tableau 3 qui précède).

Par eau liée on entend l'eau liée chimiquement à la structure par l'intermédiaire de liaisons fortes, c'est-à-dire typiquement le groupement hydroxyle -OH dans une formulation générale NaOH. La température d'élimination de l'eau liée (déhydroxylation) est largement supérieure à 100°C. Dans le cas de la déhydroxylation de l'hydroxyde de sodium anhydre, l'eau libérée est essentiellement de l'eau liée selon la formule 2NaOH + Na$_2$O + H$_2$O).

Par forme anhydre, on entend en particulier toute source d'hydroxyde de sodium présentant une perte de masse inférieure à 5%, de préférence inférieure à 2%, après un traitement thermique à 150°C pendant 1h.

Par eau libre on entend au contraire l'ensemble des molécules d'eau liée par des interactions faibles. L'eau libre peut par exemple correspondre à l'eau de solution dans lequel est présente l'hydroxyde de sodium comme décrit dans la demande US3753743A mais également à l'eau présente entre les particules d'hydroxyde de sodium, en particulier en raison de la nature hygroscopique de ce composé. Au contraire de l'eau liée, cette eau est faiblement liée à l'hydroxyde de sodium par des liaisons faibles.

Ainsi, un hydroxyde de sodium « anhydre » comprend moins de 5% d'eau libre et de préférence moins de 2% d'eau libre, au sens précédemment décrit.

Au sens de la présente invention, un hydroxyde de sodium est donc dit anhydre lorsqu'il comprend moins de 5% d'eau libre.

Le mélange B est conforme à l'enseignement de la publication US3753743A. Les mélanges C et D sont conformes à l'objet de la présente invention. L'exemple A est un exemple comparatif dans lequel on utilise classiquement du carbonate de sodium comme source de sodium.

Les performances et qualités des mélanges de matières premières selon les exemples A à D qui précèdent, y compris la qualité du verre après leur fusion, sont mesurées selon les différents critères suivants :

**1°) Mesure de l'écoulement par les tests de l'angle de talus**

L'angle de talus est une méthode d'évaluation de la coulabilité de poudre, réalisée en présage de l'écoulement des mélanges vitrifiables en sortie de mélangeuse jusqu'à l'enfournement.

Cette technique permet d'estimer, vis-à-vis du mélange de référence (mélange A), la façon dont les autres mélanges vitrifiables s'écoulent. Si l'écoulement est faible ou mauvais, les risques de colmatage sur les bandes convoyeuses ou dans les trémies d'enfournement sont plus importants.

En ce qui concerne l'angle de talus, le mélange vitrifiable est introduit dans un entonnoir à trappe. Puis la trappe est retirée pour laisser s'écouler le mélange vitrifiable sur une feuille de papier millimétré, ce qui donne lieu à un cône. La hauteur du cône est mesurée et sa circonférence est tracée sur le papier millimétré pour ensuite déduire son diamètre moyen. Enfin, avec la hauteur et le diamètre du cône, l'angle de talus du mélange vitrifiable est calculé selon les formules : Angle de talus (degrés) = 180 x Arc Tangente (hauteur du talus / (1/2 x diamètre du cône)) / $\pi$. L'interprétation des résultats de mesures est faite sur la base de la classification présente dans la Technique de l'ingénieur - Mise en forme des solides. Réf J3380 V1.

Les résultats obtenus sont regroupés dans le tableau 4 qui suit.

Le mélange de référence (Mélange A) présente un très bon écoulement au même titre que le mélange C et D avec des angles de talus compris entre 25-30° (voir la classification Technique de l'ingénieur - Mise en forme des solides. Réf J3380 V1). Le mélange D présente un bon écoulement avec un angle de talus de 32°. En revanche, avec son angle de talus supérieur à 50°, le mélange B présente un mauvais écoulement et présage l'utilisation de dispositif adéquat pour aider à la décharge en cas de passage du mélange dans une trémie par exemple. De plus, les risques d'encrassement de mélangeuse ou de colmatage sur les bandes convoyeuses sont grands dans le cas du mélange B.

Les mélanges B, C et D ont été caractérisés et les résultats obtenus sont présentés dans le tableau 4 qui suit. Les mélanges C et D selon l'invention, et plus particulièrement le mélange selon l'exemple C, peuvent être considérés comme ceux qui s'écoulent le plus librement.

[Tableau 4]

|  | Mélange A | Mélange B | Mélange D | Mélange C |
|---|---|---|---|---|
| Angle de talus | 25° | >50° | 28° | 25° |
| Energie de rupture (en relatif par rapport au mélange A) | Référence | Pas de flux | -3% | -4% |

### 2°) Mesure de l'émissivité

Un mélange de matières premières à faible émissivité produit un miroir thermique à la surface de la motte de composition, ce qui diminue la cinétique de fusion et augmente la consommation d'énergie du four pour arriver à un même degré de fusion.

L'émissivité des différents mélanges indiqués dans le tableau 5 qui suit a été mesurée à partir des spectres de réflectance en utilisant la loi de conservation de l'énergie pour les matériaux opaques : absorbance $\alpha(\lambda, T)$ + réflectance $\rho(\lambda, T) = 1$. En appliquant la loi de Kirchhoff, l'émittance spectrale peut être exprimée en termes de réflectance totale,

$$\varepsilon(\lambda, T) = \alpha(\lambda, T)$$

avec :

$$\varepsilon(T) = 1 - \frac{\int_0^\infty \rho_T(\lambda) \times B_T(\lambda) d\lambda}{\int_0^\infty B_T(\lambda) d\lambda},$$

où $B_T$ est l'éclairement énergétique spectral du corps noir à la température T de 2000°C, correspondant à la température de la flamme air-gaz du bruleur.

Les mesures de la réflectance hémisphérique à température ambiante sont réalisées avec une sphère d'intégration de 150 mm montée sur un spectrophotomètre Lambda entre 300 et 2500 nm, en utilisant comme référence de réflectance une plaque Spectralon.

Pour une manipulation facilitée, les échantillons de mélange vitrifiable sont pressés en appliquant une force de 0,4 tonnes/cm$^2$ et mouillés à 2% d'eau préalablement à la mesure.

[Tableau 5]

|  | Mélange A | Mélange B | Mélange D | Mélange C |
|---|---|---|---|---|
| Emissivité | 0,30 | n.d. | > 0,4 | >0,4 |

Afin d'améliorer le transfert thermique entre la flamme et le verre, l'homme du métier cherche à maximiser dans la mesure du possible, l'émissivité du batch. Une émissivité trop basse est un signe d'une forte réflectivité thermique qui pourrait se traduire par un effet d'écrantage. Ceci produira une augmentation de la température de la voûte et une faible température du bain de verre. Les données de la table 5 montrent que l'hydroxyde de sodium anhydre selon les exemples C et D améliore l'absorption thermique du batch par rapport à l'utilisation du carbonate de sodium (mélange A).

### 3°) Energie nécessaire à la fusion

Une diminution de la consommation énergétique entraîne logiquement une réduction des coûts (moins d'énergie à utiliser pour fondre le mélange de matières premières) et de l'emprunte carbone de la production de verre (moins de gaz à utiliser, par exemple).

L'énergie nécessaire à la fusion des différents mélanges de matières premières a été déterminé en utilisant le logiciel FactSage 8.0. L'énergie est calculée sur la gamme de température 25 et 1400°C.

Les résultats de l'évaluation sont reportés dans le tableau 6 qui suit :

[Tableau 6]

|  | Mélange A | Mélange B | Mélange D | Mélange C |
|---|---|---|---|---|
| Evolution de la consommation | Référence | +30% | -13% | -13% |
| énergétique vs mélange A |  |  |  |  |

Le tableau 6 montre qu'avec le mélange B (50% d'eau libre), on augmente drastiquement l'énergie de fusion du mélange vitrifiable : +23% par rapport à la référence (mélange A). Au contraire, avec les mélanges C et D selon l'invention, on réduit fortement la consommation énergétique par rapport à cette même référence, d'environ 11%.

### 4°) Homogénéité du verre obtenu après fusion

Un verre non homogène présente des « ondes » (défauts optiques), c'est-à-dire des zones où l'indice de réfraction varie localement en raison d'une variation de composition chimique.

Des échantillons de verre ont été fondus dans un creuset cylindrique en platine à partir des mélanges indiqués dans le tableau 2. Chaque échantillon est porté sous air à 1480°C pendant 2 heures. Le verre refroidi est ensuite carotté et découpé pour obtenir une lame comprenant la section transversale du cylindre. Cette lame est polie, métallisée au carbone et analysée à l'aide d'une microsonde électronique à 15kV. L'analyse consiste en la détermination des pourcentages massiques de $Na_2O$, CaO et de $SiO_2$ sur la hauteur de la lame (ou de l'échantillon fondu) sur 50 points de mesures, le pas de mesure étant de 500 microns.

Il est ainsi possible sur cette base de calculer la moyenne de la concentration en $Na_2O$, CaO et $SiO_2$ et les écart-types. Un critère d'homogénéité en $Na_2O$, CaO et $SiO_2$ dans le verre est fourni par le rapport écart-type divisé par la concentration moyenne ($\sigma Na_2O$ /[$Na_2O$], $\sigma CaO$ /[CaO] et $\sigma SiO_2$ /[$SiO_2$]).

Les résultats obtenus sont reportés dans le tableau 7 ci-dessous.

[Tableau 7]

|  |  | Mél. A | Mél. B | Mél. D | Mél. C |
|---|---|---|---|---|---|
| Homogénéité verre (écart type/ moyenne en %) | $Na_2O$ | 1,9 | 1,5 | 0,8 | 0,8 |
|  | CaO | 4,2 | 4,6 | 1,9 | 1,5 |
|  | $SiO_2$ | 1,0 | 1,0 | 0,5 | 0,4 |

L'homogénéité en oxyde de sodium et en oxyde de silicium apparaît particulièrement améliorée dans le cas des mélanges C et D selon l'invention, en particulier dans le cas du mélange C selon l'invention.

On résume de manière synthétique ci-après l'ensemble des résultats précédemment exposés et les avantages de la présente invention, matérialisé par la supériorité des mélanges C et D, en particulier C selon l'invention :

- un bon écoulement du mélange de matières premières,
- une émissivité améliorée du mélange vitrifiable, qui implique un meilleur transfert thermique des flammes au mélange de matières premières lors de la fusion,
- une diminution sensible de l'énergie de fusion globale du mélange,
- une meilleure homogénéité du verre finalement obtenu.

### Revendications

1. Mélange de matières premières pour la fabrication de verre, en particulier de fibres de verre, présentant une composition cible, ladite composition cible répondant à la formulation suivante :

- $SiO_2$ : entre 50 et 75%, de préférence entre 60 et 70%
- $Na_2O$: entre 10 et 25%, de préférence entre 10 et 20%

- CaO: entre 5 et 15%, de préférence entre 5 et 10%
- MgO : entre 1 à 10%, de préférence entre 2 et 5%
- CaO et MgO représentant ensemble de préférence entre 5 et 20%
- $B_2O_3$ : entre 1 et 10%, de préférence entre 2 et 8%
- $Al_2O_3$ : entre 0 et 8%, de préférence entre 1 et 6%
- $K_2O$ : entre 0 et 5%, de préférence entre 0,5 et 2%
- $Na_2O$ et $K_2O$ représentant ensemble de préférence entre 12 et 20%
- Oxyde de fer : entre 0 et 3%, de préférence moins de 2%, de préférence encore moins de 1%,
- autre (s) oxyde (s) : entre 0 et 5 % poids en cumulé, de préférence moins de 3% en cumulé,

le reste étant constitué d'impuretés inévitables,
ledit mélange comprenant :

- au moins une source de silicium notamment choisie parmi la silice, un calcin de verre, des fibres minérales recyclées, en particulier de laine de verre recyclée, en particulier un mélange de silice et de calcin de verre ou un mélange de silice et de fibres minérales recyclées, ou encore un mélange de silice, de calcin de verre et de fibres minérales recyclées,
- au moins une source de sodium sous forme d'hydroxyde de sodium,
- au moins une source de calcium, de préférence choisie parmi le calcaire, la chaux vive ou éteinte ou un oxyde mixte de calcium avec au moins un élément choisi dans le groupe constitué par Si, Mg, en particulier un silicate de calcium, ladite source de calcium pouvant être au moins en partie du calcin,
- au moins un porteur de bore, de préférence choisie parmi un oxyde de bore tel que le pentaborax ou un oxyde mixte de bore avec au moins un élément choisi dans le groupe constitué par Si, Mg, Ca, en particulier un oxyde choisi dans le groupe constitué par la colémanite, l'ulexite, la tincalconite ou la kernite,
- optionnellement au moins une source de magnésium de préférence choisie parmi la dolomie, éventuellement calcinée, la magnésite ou un oxyde mixte de magnésium avec au moins un élément choisi dans le groupe constitué par Si, Ca, en particulier un silicate de magnésium,
- optionnellement au moins un composé choisi dans le groupe constitué par le feldspath, notamment de formule (K,Na)AlSi3O8, la néphéline ou la phonolite,
- optionnellement du laitier,
- optionnellement du calcin de verre recyclé,

**caractérisé en ce que** l'hydroxyde de sodium est sous forme anhydre.

2. Mélange selon la revendication 1, dans lequel l'hydroxyde de sodium anhydre est sous la forme d'un ensemble de particules présentant une densité apparente inférieure à 1,2 $g/cm^3$.

3. Mélange selon la revendication 1 ou 2, dans lequel l'hydroxyde de sodium anhydre est sous la forme d'un ensemble de particules présentent une circularité moyenne inférieure ou égale à 0,85, de préférence inférieure à 0,80, ou même inférieure à 0,75.

4. Mélange selon l'une des revendications précédentes, dans lequel ledit l'hydroxyde de sodium anhydre est sous la forme d'un ensemble de particules présentant un rapport de forme moyen supérieur à 1,15, de préférence supérieur à 1,20.

5. Mélange selon l'une des revendications précédentes, dans lequel ledit hydroxyde de sodium anhydre est sous forme d'un ensemble de particules dont le diamètre de Féret moyen est supérieur à 5 millimètres, de supérieur à 10 millimètres.

6. Mélange selon l'une des revendications précédentes, dans lequel l'hydroxyde de sodium anhydre comprend une proportion d'eau totale inférieure à 30% poids, de préférence inférieure à 25% poids.

7. Mélange selon l'une des revendications précédentes, dans lequel ledit hydroxyde de sodium anhydre est la seule source de sodium, hormis les éventuels ajouts de calcin ou de feldspath, de néphéline ou de phonolite.

8. Mélange selon l'une des revendications précédentes, dans lequel le sodium est apporté sous forme d'un mélange d'hydroxyde de sodium anhydre et de carbonate de sodium $Na_2CO_3$, l'hydroxyde de sodium anhydre représentant de préférence plus de 20% poids dudit mélange, ou même plus de 50% poids dudit mélange.

9. Mélange selon l'une des revendications précédentes, dans lequel une source de calcium est un silicate de calcium minéral comprenant, en pourcentage poids, plus de 30% de $SiO_2$ et plus de 10% de CaO, de préférence plus de 15% de CaO, CaO et $SiO_2$ représentant ensemble plus de 60%, voire plus de 70% ou même plus de 80% du poids total de ladite source.

10. Mélange selon l'une des revendications précédentes, dans lequel une source de magnésium est un silicate de magnésium minéral comprenant, en pourcentage poids, plus de 30% de $SiO_2$ et plus de 10% de MgO, de préférence plus de 15% de MgO, MgO et $SiO_2$ représentant ensemble plus de 60%, voire plus de 70% ou même plus de 75% du poids total de ladite source.

11. Mélange selon l'une des revendications précédentes, dans lequel une source de potassium est un hydroxyde de potassium.

12. Mélange selon l'une des revendications précédentes, dans lequel une source de calcium est un hydroxyde de calcium.

13. Mélange selon l'une des revendications précédentes, dans lequel une source de magnésium est un hydroxyde de magnésium.

14. Mélange selon l'une des revendications précédentes dans lequel l'hydroxyde de sodium anhydre présente une densité apparente inférieure à 1,0 g/cm$^3$, de préférence inférieure à 0,8 g/cm$^3$.

15. Procédé de fabrication d'un verre présentant une composition cible, comprenant la fusion d'un mélange de matières premières selon l'une des revendications précédentes, ledit mélange constituant un bain de fusion, ladite composition cible répondant aux critères suivants, en pourcentages poids :

   - $SiO_2$ : entre 50 et 75%, de préférence entre 60 et 70%
   - $Na_2O$: entre 10 et 25%, de préférence entre 10 et 20%
   - CaO: entre 5 et 15%, de préférence entre 5 et 10%
   - MgO : entre 1 à 10%, de préférence entre 2 et 5%
   - CaO et MgO représentant ensemble de préférence entre 5 et 20%
   - $B_2O_3$ : entre 1 et 10%, de préférence entre 2 et 8%
   - $Al_2O_3$ : entre 0 et 8%, de préférence entre 1 et 6%
   - $K_2O$ : entre 0 et 5%, de préférence entre 0,5 et 2%
   - $Na_2O$ et $K_2O$ représentant ensemble de préférence entre 12 et 20%
   - Oxyde de fer : entre 0 et 3%, de préférence moins de 2%, de préférence encore moins de 1%,
   - autre (s) oxyde (s) : entre 0 et 5 % poids en cumulé, de préférence moins de 3% en cumulé,

   ledit procédé étant **caractérisé en ce qu'**il comprend les étapes suivantes :

   a) on sélectionne les quantités nécessaires en lesdites matières premières pour obtenir après fusion un verre de ladite composition cible les matières premières dudit bain de fusion, lesdites matières premières étant choisies parmi, au moins:

      - au moins une source de silicium notamment choisie parmi la silice, un calcin de verre, des fibres minérales recyclées, en particulier de laine de verre recyclée, en particulier un mélange de silice et de calcin de verre ou un mélange de silice et de fibres minérales recyclées, ou encore un mélange de silice, de calcin de verre et de fibres minérales recyclées,
      - au moins une source de sodium sous forme d'hydroxyde de sodium,
      - au moins une source de calcium, de préférence choisie parmi le calcaire, la chaux vive ou éteinte ou un oxyde mixte de calcium avec au moins un élément choisi dans le groupe constitué par Si, Mg, en particulier un silicate de calcium, ladite source de calcium pouvant être au moins en partie du calcin,
      - au moins un porteur de bore, de préférence choisie parmi un oxyde de bore tel que le pentaborax ou un oxyde mixte de bore avec au moins un élément choisi dans le groupe constitué par Si, Mg, Ca, en particulier un oxyde choisi dans le groupe constitué par la colémanite, l'ulexite, la tincalconite ou la kernite,
      - optionnellement au moins une source de magnésium de préférence choisie parmi la dolomie, éventuellement calcinée, la magnésite ou un oxyde mixte de magnésium avec au moins un élément choisi dans le groupe constitué par Si, Ca, en particulier un silicate de magnésium,

- optionnellement au moins un composé choisi dans le groupe constitué par le feldspath, notamment de formule $(K,Na)AlSi_3O_8$, la néphéline ou la phonolite,
- optionnellement du laitier,
- optionnellement du calcin de verre recyclé,

b) on effectue ledit mélange desdites matières premières selon lesdites quantités,
c) on effectue la fusion dudit mélange et son refroidissement dans les conditions permettant l'obtention dudit verre,

dans lequel l'hydroxyde de sodium dans ledit mélange est anhydre.

16. Procédé de fabrication selon la revendication précédente, dans lequel l'hydroxyde de sodium anhydre est sous la forme d'un ensemble de particules présentant une densité apparente inférieure à 1,2 g/cm$^3$, de préférence une densité apparente inférieure à 1,0 g/cm$^3$, de préférence encore inférieure à 0,8 g/cm$^3$.

# RAPPORT DE RECHERCHE EUROPEENNE

Europäisches Patentamt
European Patent Office
Office européen des brevets

Numéro de la demande

EP 25 16 6582

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2022/229568 A1 (SAINT GOBAIN [FR]) 3 novembre 2022 (2022-11-03) * exemple 6; tableaux 1,6 * ----- | 1-16 | INV. C03C1/00 C03C3/089 C03C3/091 C03C13/00 |
| A | WO 2022/229571 A1 (SAINT GOBAIN ISOVER [FR]; SAINT GOBAIN ADFORS [FR]) 3 novembre 2022 (2022-11-03) * exemples 1,7; tableau 1 * ----- | 1-16 | |

**DOMAINES TECHNIQUES RECHERCHES (IPC)**

C03C

Le présent rapport a été établi pour toutes les revendications

| Lieu de la recherche | Date d'achèvement de la recherche | Examinateur |
|---|---|---|
| Munich | 6 août 2025 | Saldamli, Saltuk |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 16 6582

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-08-2025

| Document brevet cité au rapport de recherche | Date de publication | Membre(s) de la famille de brevet(s) | Date de publication |
|---|---|---|---|
| WO 2022229568 A1 | 03-11-2022 | BR 112023020594 A2 | 12-12-2023 |
| | | CN 117321013 A | 29-12-2023 |
| | | CO 2023013904 A2 | 10-11-2023 |
| | | EP 4330200 A1 | 06-03-2024 |
| | | FR 3122421 A3 | 04-11-2022 |
| | | WO 2022229568 A1 | 03-11-2022 |
| | | ZA 202309718 B | 31-07-2024 |
| WO 2022229571 A1 | 03-11-2022 | CA 3216442 A1 | 03-11-2022 |
| | | CN 117279869 A | 22-12-2023 |
| | | EP 4330203 A1 | 06-03-2024 |
| | | ES 3031096 T3 | 03-07-2025 |
| | | FR 3122417 A3 | 04-11-2022 |
| | | PL 4330203 T3 | 23-06-2025 |
| | | US 2025074812 A1 | 06-03-2025 |
| | | WO 2022229571 A1 | 03-11-2022 |

EPO FORM P0460

Pour tout renseignement concernant cette annexe : voir Journal Officiel de l'Office européen des brevets, No.12/82

**EP 4 624 433 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 399320 A
- US 3753743 A
- BE 761040 A
- WO 2022229571 A